# EUROPEAN PATENT SPECIFICATION

(11) **EP 4 350 838 B1**
(45) Date of publication and mention of the grant of the patent: **30.04.2025**
(21) Application number: 23190296.6
(22) Date of filing: 08.08.2023
(51) Int. Cl.: H01M 10/42, H01M 10/48

(54) **METHODS AND APPARATUS FOR UTILIZING THE TIME SEQUENCE OF SENSOR EVENTS TO DETERMINE THE CAUSE OF A THERMAL RUNAWAY EVENT**
VERFAHREN UND VORRICHTUNG ZUR VERWENDUNG DER ZEITSEQUENZ VON SENSOREREIGNISSEN ZUR BESTIMMUNG DER URSACHE EINES EREIGNISSES ZUM THERMISCHEN DURCHGEHEN
PROCÉDÉS ET APPAREIL POUR UTILISER LA SÉQUENCE TEMPORELLE D'ÉVÉNEMENTS DE CAPTEUR POUR DÉTERMINER LA CAUSE D'UN ÉVÉNEMENT D'EMBALLEMENT THERMIQUE

(30) Priority: 09.09.2022 CN 202211100065
(43) Date of publication of application: 10.04.2024
(73) Proprietor: Honeywell International Inc., Charlotte, NC 28202 (US)
(72) Inventor: YANG, Fan, Charlotte, 28202 (US); CHEN, Wu, Charlotte, 28202 (US); HU, Yu, Charlotte, 28202 (US); WANG, Jie, Charlotte, 28202 (US)
(74) Representative: Haseltine Lake Kempner LLP

(56) References cited:
- CN-A- 114 919 415
- US-B2- 10 686 225

## Description

### TECHNOLOGICAL FIELD

Embodiments of the present disclosure relate generally to a battery safety evaluation system, and more particularly, to a battery safety evaluation system that utilizes the recorded timing of various events to determine the cause of a battery condition, such as a thermal runaway event.

### BACKGROUND

Applicant has identified many technical challenges and difficulties associated with detecting and determining the cause of a thermal runaway event in a battery. Through applied effort, ingenuity, and innovation, Applicant has solved problems related to identifying the cause of thermal runaway events by developing solutions embodied in the present disclosure, which are described in detail below. Prior art documents US2018040920 and CN114919415A disclose battery systems with thermal runaway units.

### BRIEF SUMMARY

Various embodiments are directed to an example method, apparatus, and computer program product for determining the cause of a battery condition, such as a thermal runaway event, based on data observed by various sensors in and around a battery package.

In accordance with some embodiments of the present disclosure, an example battery safety evaluation system is provided. In some embodiments, the battery safety evaluation system may comprise a battery comprising a battery housing defining an interior battery compartment. and an internal sensing element attached to the interior battery compartment. In some embodiments, the internal sensing element may be configured to capture internal data representative of an internal battery condition event. The battery safety evaluation system may further comprise an external sensing element attached to the battery housing, wherein the external sensing element is configured to capture external data representative of an external battery condition event. In addition, the battery safety evaluation system may comprise a controller communicatively connected to the internal sensing element and the external sensing element, wherein the controller determines a cause of a battery condition based at least in part on a time sequence of events generated from the internal data captured by the internal sensing element and representative of the internal battery condition event and the external data captured by the external sensing element and representative of the external battery condition event.

In some embodiments, the battery condition may be a thermal runaway event.

In some embodiments, the internal sensing element may comprise at least one of a pressure sensor and an aerosol sensor.

In some embodiments, the external sensing element may comprise at least a vibration sensor.

In some embodiments, the internal sensing element may comprise a pressure sensor and an aerosol sensor, and the external sensing element may comprise a vibration sensor.

In some embodiments, a vibration battery condition event may be captured at a vibration event time, an aerosol battery condition event may be captured at an aerosol event time, and a pressure battery condition event may be captured at a pressure event time. Further, in an instance in which the vibration event time is earlier than the aerosol event time, and the aerosol event time is earlier than the pressure event time, the battery safety evaluation system may determine the cause of the battery condition is an external condition. In addition, in an instance in which the aerosol event time is earlier than the pressure event time, and the pressure event time is earlier than the vibration event time, the battery safety evaluation system may determine the cause of the battery condition is an internal condition.

In some embodiments, at least one of the internal sensing element and the external sensing element may detect an occurrence of a battery condition event and communicate the occurrence of the battery condition event to the controller.

An example method for determining a cause of a battery condition is further provided. In some embodiments, the method may comprise receiving, from an internal sensing element attached to an interior battery compartment of a battery, internal data representative of an internal battery condition event. The method may further comprise receiving, from an external sensing element attached to a battery housing of the battery, external data representative of an external battery condition event. Further, the method may comprise determining the cause of the battery condition based at least in part on a time sequence of events generated from the internal data captured by the internal sensing element and representative of the internal battery condition event and the external data captured by the external sensing element and representative of the external battery condition event.

In some embodiments, the battery condition may be a thermal runaway event.

In some embodiments, the internal sensing element may comprise at least one of a pressure sensor and an aerosol sensor.

In some embodiments, the external sensing element may comprise at least a vibration sensor.

In some embodiments, the internal sensing element may comprise a pressure sensor and an aerosol sensor, and the external sensing element may comprise a vibration sensor.

In some embodiments, the method may further comprise receiving vibration data representative of a vibration battery condition event, captured at a vibration event time, receiving aerosol data representative of an aerosol battery condition event, captured at an aerosol event time, and receiving pressure data representative of a pressure battery condition event, captured at a pressure event time. Further, determining the cause of the battery condition may comprise comparing the vibration event time, the aerosol event time, and the pressure event time. In an instance in which the vibration event time is earlier than the aerosol event time, and the aerosol event time is earlier than the pressure event time, the cause of the battery condition may be an external condition. In addition, in an instance in which the aerosol event time is earlier than the pressure event time, and the pressure event time is earlier than the vibration event time, the cause of the battery condition may be an internal condition.

In some embodiments, at least one of the one or more internal sensing elements and the one or more external sensing elements may detect an occurrence of a battery condition event and communicate the occurrence of the battery condition event to a controller.

An example computer program product for determining a cause of a battery condition is further provided. In some embodiments, the computer program product may comprise at least one non-transitory computer-readable storage medium having computer-readable program code portions stored therein, the computer-readable program code portions comprising an executable portion configured to receive, from an internal sensing element attached to an interior battery compartment of a battery, internal data representative of an internal battery condition event. In addition, the executable portion may be configured to receive, from an external sensing element attached to a battery housing of the battery, external data representative of an external battery condition event, and determine the cause of the battery condition based at least in part on a time sequence of events generated from the internal data captured by the internal sensing element and representative of the internal battery condition event and the external data captured by the external sensing element and representative of the external battery condition event.

In some embodiments, the battery condition may be a thermal runaway event.

In some embodiments, the internal sensing element may comprise at least one of a pressure sensor and an aerosol sensor.

In some embodiments, the external sensing element may comprise at least a vibration sensor.

In some embodiments, the internal sensing element may comprise a pressure sensor and an aerosol sensor, and the external sensing element may comprise a vibration sensor.

In some embodiments, the computer-readable program code portions comprising an executable portion may be further configured to receive vibration data representative of a vibration battery condition event, captured at a vibration event time, receive aerosol data representative of an aerosol battery condition event, captured at an aerosol event time, and receive pressure data representative of a pressure battery condition event, captured at a pressure event time. In some embodiments, the cause of the battery condition may further comprise comparing the vibration event time, the aerosol event time, and the pressure event time. Further, in an instance in which the vibration event time is earlier than the aerosol event time, and the aerosol event time is earlier than the pressure event time, the cause of the battery condition may be an external condition. In addition, in an instance in which the aerosol event time is earlier than the pressure event time, and the pressure event time is earlier than the vibration event time, the cause of the battery condition may be an internal condition.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1A illustrates an example block diagram of a battery safety evaluation system in accordance with an example embodiment of the present disclosure.
FIG. 1B illustrates another example block diagram of a battery safety evaluation system in accordance with an example embodiment of the present disclosure.
FIG. 2 illustrates example components of a battery safety evaluation system in accordance with an example embodiment of the present disclosure.
FIG. 3 illustrates an example block diagram showing example components of a controller in accordance with an example embodiment of the present disclosure.
FIG. 4 depicts example vibration, pressure, and aerosol graphs illustrating an example sequence of events in accordance with an example embodiment of the present disclosure.
FIG. 5 depicts an additional example sequence graph in accordance with an example embodiment of the present disclosure.
FIG. 6 depicts a flowchart illustrating example operations performed by a controller in determining a cause of a thermal runaway event in accordance with an example embodiment of the present disclosure.
FIG. 7 depicts a decision tree illustrating example outcomes of the battery safety evaluation system in accordance with an example embodiment of the present disclosure.

### DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems associated with determining the cause of a battery condition, particularly thermal runaway events occurring on an electric car battery (also referred to herein as battery package). As understood by those of skill in the field to which the present disclosure pertains, there are numerous example scenarios in which a user may need to determine the cause of a thermal runaway event during or even after an event has occurred.

Batteries (e.g., lithium-ion batteries, lithium-polymer batteries, etc.) may undergo a chemical reaction within a battery cell to supply power to various devices, for example electric vehicles. Devices requiring substantial amounts of power, such as electric vehicles, may contain tens or even hundreds of battery cells in a battery package. To accommodate a vast array of battery cells, many electric vehicles are being manufactured using cell-to-chassis technology, which integrates the battery package into the structure of the vehicle. As such, substantial portions of the battery package are exposed to impacts from objects on the road, loose objects such as rocks and sticks, contact with speed bumps and curbs, and other objects that may potentially impact and damage the battery package. Large impacts and/or punctures to the battery package can damage the battery package, causing the battery to enter into a dangerous battery condition.

One example of a battery condition is a thermal runaway event. In certain circumstances, the movement of electrons and lithium ions in the battery may produce heat faster than the battery package can dissipate the generated heat. Once the internal temperature of the battery reaches a certain point, the temperature of the battery may rise uncontrollably until the battery combusts. This dangerous occurrence is referred to as a thermal runaway event.

Impacts, such as those described above would be examples of external conditions causing a thermal runaway event. In addition, internal conditions can lead to a thermal runaway event. Internal conditions may include overcharging, over discharging, short circuits, overheating, and similar events.

Determining the cause of a thermal runaway event may have many benefits. For example, determining the cause of a thermal runaway event may initially inform the mitigating action to be taken. If a thermal runaway event was caused by external factors, for example, disabling the power source may be sufficient to mitigate the thermal runaway event. However, if the thermal runaway event resulted form internal factors, more drastic measures may need to be taken by a battery management system to neutralize the event.

In addition, determining the cause of a thermal runaway event can further inform manufacturers on potential weaknesses and/or improvements that can be made to the battery package, the battery management system, and even the battery charger. Further, the cause of a thermal runaway event may be an important factor in determining insurance coverage and liability.

In some examples, sensors have been used to detect a thermal runaway event in the early stages. Placing sensors inside the battery compartment may provide helpful information regarding the current state of the battery. For example, in the early stages of thermal runaway, there may be a sharp rise in temperature and/or pressure. In addition, the early stages of thermal runaway may be characterized by the presence of certain gases indicative of uncontrolled chemical reactions and/or smoke. In some examples, temperature, pressure, gas, and other sensors are placed inside the battery package to detect these changes in the environment and provide early warning of thermal runaway. However, these solutions simply detect the thermal runaway event as it is unfolding. None of these examples determine the initial cause of the thermal runaway event.

The various example embodiments described herein utilize various techniques to determine the cause of a thermal runaway event. For example, in some embodiments, various internal sensing elements are placed in the interior compartment of the battery package. In some embodiments, these sensors may include pressure sensors, gas sensors, aerosol sensors, temperature sensors, or any combination thereof. Each of these sensors may record environmental data of the physical condition of the interior compartment of the battery package. In addition, external sensing elements may be attached to or near the external housing of the battery package to record environment data external to the battery package. In some embodiments, these external sensing elements may include vibration sensors, accelerometers, velocity sensors, proximity probes, and/or the like.

Each sensor may independently collect data representative of the physical condition of the environment in and around the battery package. In some embodiments, the collected data may be sent to a central controller for analysis. In some embodiments, further analysis may be performed on the sensing element. A thermal runaway event may be manifest differently in each of the sensors. For example, a thermal runaway event may be manifest as a sharp increase in pressure or a pressure level over a determined threshold as detected by the pressure sensor. In addition, a thermal runaway event may result in the presence of smoke or other gases in the interior battery compartment, detectable by a gas or aerosol sensor. Further, a thermal runaway event may result in a sharp increase in temperature. An accelerometer, or vibration sensor, may detect changes in the frequency of the vibrations of the battery package and/or a jolt or impact with the battery package, further evidence of a thermal runaway event. The individual events as detected by each of the individual sensors may be referred to as a battery condition event.

While each of these sensors may independently detect environment conditions indicative of a thermal runaway event, not all these events necessarily occur at the same time. In a first example, at the onset of a thermal runaway event, the aerosol sensor may first detect the presence of smoke, after which the pressure sensor detects an increase in pressure, followed by change in vibration detectable by the external vibration sensor. Or, in a second example, the external vibration sensor may first detect an impact or change in vibration, followed by the presence of gases or smoke in the interior battery compartment, and finally an increase in pressure. The sequence of these battery condition events may provide important information as to the cause of the thermal runaway event. For example, detection of conditions indicative of a thermal runaway event first by an aerosol sensor, then a pressure sensor, and finally by a vibration sensor, may be an indication that the thermal runaway event was caused by an internal condition, such as overcharging. However, detection of conditions indicative of a thermal runaway event first by a vibration sensor, then an internal aerosol sensor, and then a pressure sensor may be an indication that the thermal runaway event was caused by an external condition, such as an impact to the battery package.

As a result of the herein described example embodiments and in some examples, a battery safety evaluation system may determine the cause of a battery condition (e.g., thermal runaway) based on the time sequence of events occurring at the various internal and external sensing elements. Determination of the cause of such a battery condition may aid in the mitigation of the battery condition, aid in safety improvements to the manufacturing of battery packages, and/or provide information relevant to the liability of such an event.

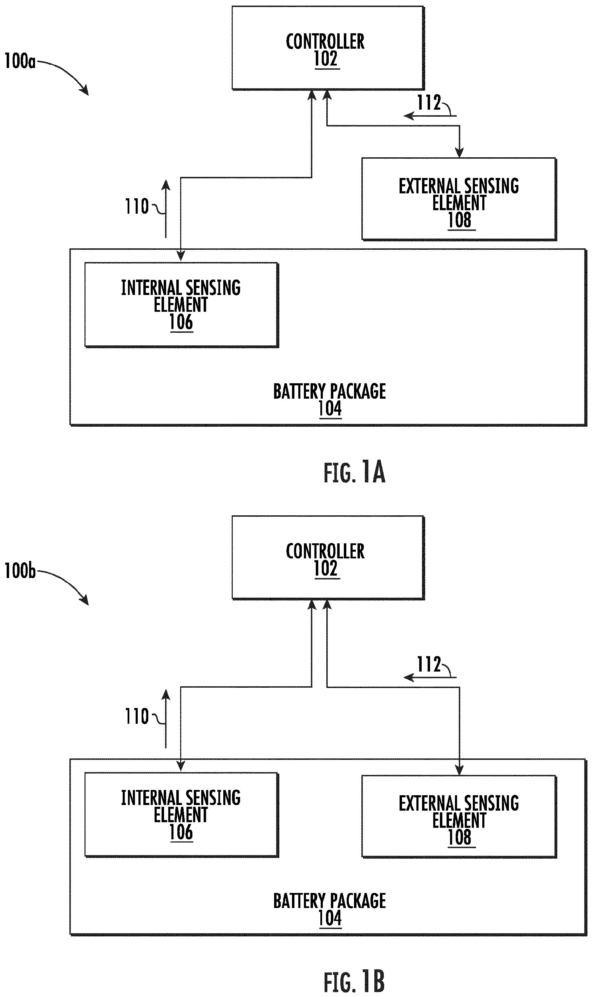

Referring now to FIG. 1A, an example block diagram of a battery safety evaluation system 100a is provided. The depicted example battery safety evaluation system 100a of FIG. 1A shows a controller 102 communicatively connected to an internal sensing element 106 and an external sensing element 108. FIG. 1A further depicts the internal sensing element 106 within a battery package 104 and the external sensing element 108 external to the battery package 104. As shown in FIG. 1A, the controller 102 receives internal data 110 from the internal sensing element 106 and external data 112 from the external sensing element 108.

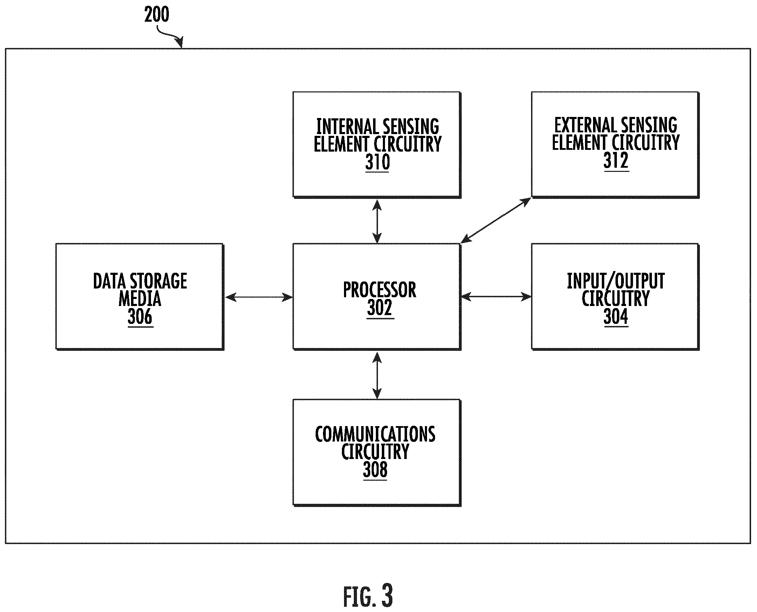

As depicted in FIG. 1A, the example battery safety evaluation system 100a includes a controller 102. A controller 102 may be any means such as a device or circuitry embodied in either hardware or a combination of hardware and software that is configured to receive internal data 110 and external data 112 related to the physical condition of the environment in and around the battery package 104 and determine the cause of a battery condition based on the received data (e.g., internal data 110 and external data 112). As an example, the controller 102 may comprise a form as shown in FIG. 3. While FIG. 3 provides an example controller 102, it is noted that the scope of the present disclosure is not limited to the example shown in FIG. 3.

In some embodiments, the controller 102 may receive and monitor periodic sensor data related to the physical condition of the environment. The controller 102 may receive such data by periodic request, and/or by automated update from one or more of the sensing elements. For example, a sensing element, such as a pressure sensor may be configured to report a data reading every 5 milliseconds. The pressure sensor may then determine the pressure reading and transmit the current pressure reading to the controller 102 every 5 milliseconds. When the controller 102 receives periodic updates of a sensor reading, the controller 102 may detect a battery condition event (e.g., an internal battery condition event for data received from an internal sensing element 106 and an external battery condition event for data received from an external sensing element 108). The controller 102 may detect a battery condition event through processing based on the received sensor readings and corresponding timestamps, depending on the sensing element. In some embodiments, the sensing element may process the environmental data and detect a battery condition event based on the measured environmental data. In such an instance, the sensing element may transmit or register an occurrence of the battery condition event and the corresponding time stamp.

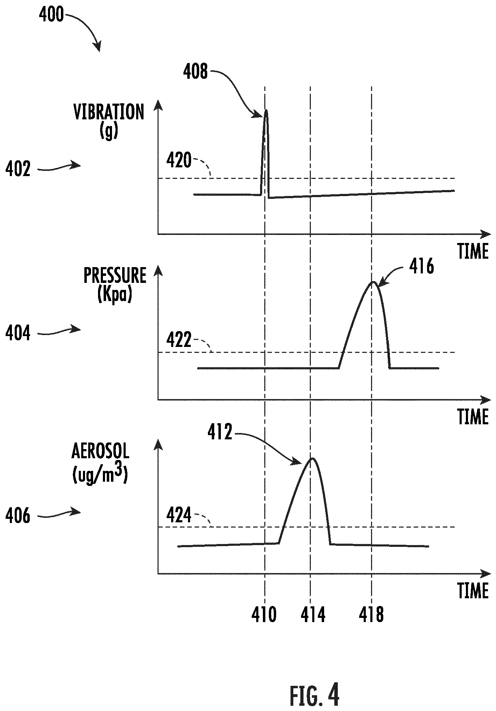

A controller 102 may further determine the cause of the battery condition based on the time correlated environment data received from the internal and external sensing elements 106, 108 and/or based on the time correlated battery condition events transmitted by the internal and external sensing elements 106, 108. The controller 102 may receive and/or determine the time sequence of the battery condition events and determine the cause of the battery condition based on the time sequence. As further described in FIG. 4-5, and 7, the controller 102 may determine at least whether the battery condition was caused by a condition internal to the battery package 104 or a condition external to the battery package 104 based on the time sequence of the battery condition events.

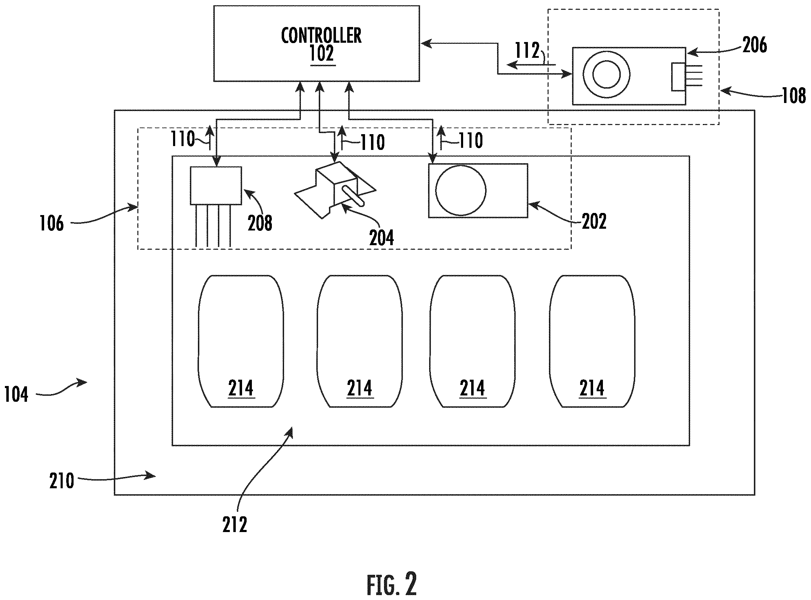

As further depicted in FIG. 1A, the example battery safety evaluation system 100a includes a battery package 104. A battery package 104 may be any network, system, and/or housing of one or more battery cells, utilizing chemical reactions to supply power to a device, such as an electric vehicle. In general, a battery cell (e.g., battery cell 214 as depicted in FIG. 2) utilizes a chemical reaction to supply power to produce an output power supply. As an example, when the battery package 104 is discharging, ions move from the positive electrode/terminal to the negative electrode/terminal, releasing free electrons and providing an electric current to the operating device (e.g., an electric car). A battery cell may contain a large variety of chemical compositions (e.g., lithium-nickel-manganese-cobalt oxides, lithium-iron phosphates, etc.). The chemical reactions occurring in these batteries can be susceptible to dangerous battery conditions, such as thermal runaway events. In thermal runaway events, the chemical reactions generate heat faster than the heat may be dissipated and the temperature of the battery cell increases uncontrollably until the cell combusts. The output power supply necessary to operate an electric vehicle can be quite extensive, requiring a significant number battery cells and a significant number of chemical reactions. Many electric vehicles today have begun arranging large numbers of battery cells into a battery package 104 that is integrated as part of the body of the electric vehicle. This technology has largely come to be known as cell-to-chassis technology. Such battery packages 104 may be particularly prone to thermal runaway and eventual combustion as a result of mechanical, electrical and/or thermal stress and abuse.

As depicted in FIG. 1A, the example battery safety evaluation system 100a includes an internal sensing element 106. An internal sensing element 106 may be any electrical, mechanical, and/or electro-mechanical device capable of detecting or measuring a physical property associated with the interior of a battery package 104. A battery safety evaluation system 100a may include one or more internal sensing elements 106 in determining the cause of a battery condition. Internal sensing elements 106 may be attached to the interior surface of the battery package 104 or any component, cell, or structure on the interior of the battery package 104. Non-limiting examples of internal sensing elements 106 may include pressure sensors, aerosol sensors, force sensors, temperature sensors, moisture sensors, light sensors, gas sensors, alcohol sensors, gyroscope sensors, and/or the like. One or more internal sensing elements 106 may be coupled with circuitry to provide an electrical output representing the measured physical property which may be transmitted to the controller 102 as internal data 110. This internal data 110 may be utilized by the controller 102 in the determination of the cause of a battery condition.

Similarly, as depicted in FIG. 1A, the example battery safety evaluation system 100a includes an external sensing element 108. Similar to the internal sensing element 106, the external sensing element 108 may be any electrical, mechanical, and/or electro-mechanical devices capable of detecting or measuring a physical property at or near the exterior of the battery package 104. A battery safety evaluation system 100a may include one or more external sensing elements 108 in determining the cause of a battery condition. In some embodiments, one or more external sensing elements 108 may be attached to the external surface of the battery package 104 or any component near the battery package 104 such that the one or more external sensing elements 108 provide insight into the environment surrounding the battery package 104. Non-limiting examples of external sensing elements 108 may also include pressure sensors, aerosol sensors, force sensors, temperature sensors, moisture sensors, light sensors, gas sensors, alcohol sensors, deformation sensors, gyroscope sensors, and/or the like. Similar to the internal sensing elements 106, one or more external sensing elements 108 may be coupled with circuitry to provide an electrical output representing the measured physical property which may be transmitted to the controller 102 as external data 112. This external data 112 may be utilized by the controller 102 in the determination of the cause of a battery condition.

In some embodiments, the controller 102 may communicate with the internal sensing elements 106, and/or the external sensing elements 108 through wireless protocols, for example, IEEE 802.11 Wi-Fi, near field communication (NFC) protocols, Wibree, Bluetooth protocols, wireless universal serial bus (USB) protocols, and/or any other wireless protocol.

Referring to FIG. 1B, another example of a battery safety evaluation system 100b is provided. The depicted battery safety evaluation system 100b includes an external sensing element 108 within the battery package 104. In some embodiments, an external sensing element 108 may be included on the interior of the battery package 104 and attached to the battery housing wall, such that the external sensing element 108 may capture physical conditions exterior to the battery package 104. For example, a vibration sensor may be attached to the interior wall of the battery package 104 and detect vibrations on or near the wall of the battery package 104. As another example, a deformation sensor may be attached to the interior wall of the battery package 104 to detect deformations in the battery package 104 walls. Deformations in the battery package 104 wall may be representative of pressure build-up from within the battery package 104 and/or deformation from an external force or impact.

Referring now to FIG. 2, an example system diagram of a battery safety evaluation system 100a is provided. The depicted battery safety evaluation system 100a shows an example battery package 104 including a battery housing 210 defining an interior battery compartment 212. Within the interior battery compartment 212 are one or more battery cells 214. Additionally, within the interior battery compartment 212 is an internal sensing element 106 comprising an aerosol sensor 202, a pressure sensor 204, and a temperature sensor 208. Each sensor of the internal sensing element 106 is communicatively connected to the controller 102 and further provides internal data 110 to the controller 102. Further, an external sensing element 108 including a vibration sensor 206 is attached to the battery housing 210, external to the battery package 104. The vibration sensor 206 further provides external data 112 to the controller 102 via a communication connection.

As depicted in FIG. 2, the example battery safety evaluation system 100a includes a battery package 104 comprising a battery housing 210, and one or more battery cells 214 disposed in an interior battery compartment 212. In some non-limiting examples, a battery housing 210 may comprise aluminum, steel, or other metals; plastics and/or reinforced plastics; or any other material capable of protecting the interior components and battery cells 214 of the battery package 104.

The battery housing 210 defines a space or compartment (e.g., interior battery compartment 212) into which the internal battery components and/or internal sensing element 106 may be disposed. In some embodiments, the battery housing 210 may provide structures to support, attach, and/or separate the battery cells 214, internal sensing element 106, wiring, and/or other internal components of the battery package 104. Additionally or alternatively, a battery housing 210 may include structures and/or devices to provide cooling to the internal components of the battery package 104.

Contained within the battery housing 210 of the example battery package 104 of FIG. 2 is a plurality of battery cells 214. The battery cells 214 may take many forms, including but not limited to cylindrical cells, prismatic cells, pouch cells, etc. The battery cells 214 may be attached and/or separated by structures defined in the battery housing 210. Additionally, the battery cells 214 may be electrically connected in parallel and/or series to provide an accumulated power output to the operating device (e.g., an electric vehicle). Each battery cell 214 may house chemical components which undergo a chemical process to generate electrical current. The chemical components of the battery cells 214 may comprise numerous compositions, for example, lithium-ion, lithium-polymer, lithium-iron phosphate, lithium Sulphur, and other lithium based compositions; nickel manganese cobalt; nickel metal hydride; lead acid; or any other chemical composition capable of providing sufficient electrical current through a chemical process. The chemical process occurring within the battery cells 214 may be prone to dangerous battery conditions, such as, a thermal runaway event.

As further depicted in FIG. 2, the example battery safety evaluation system 100a includes an aerosol sensor 202. An aerosol sensor 202 may be any electrical, mechanical, and/or electro-mechanical device capable of detecting the presence or measuring the amount of particles associated with a battery condition. An aerosol sensor 202 may be configured to detect the presence and/or concentration of certain molecules. The detected molecules may be molecules of a certain gas that is indicative of a battery condition. For example, progression of a thermal runaway event may be characterized by elevated levels of methane, carbon, and diethyl carbonate. An aerosol sensor 202 may be configured to measure the levels of one or more of these molecules and register a battery condition event if the determined threshold is exceeded. In addition, an aerosol sensor 202 may be configured to measure the presence of molecules associated with smoke. Once the presence of smoke molecules exceeds a threshold level, a battery condition event may be registered.

As depicted in FIG. 2, the example aerosol sensor 202 is disposed in the interior battery compartment 212 to measure internal data representative of an internal battery condition event. The presence of smoke, or other molecules, may be an indicator of a dangerous battery condition, such as a thermal runaway event. A sudden spike, a certain concentration level, and/or the presence of detected particles, may be registered as a battery condition event. The aerosol sensor 202 may be coupled with circuitry to provide an electrical output representing the presence or number of measured particles, which may be transmitted to the controller 102 as internal data 110. In some embodiments, the aerosol sensor 202 may further include a processor, allowing the aerosol sensor 202 to process measured particle data and detect a battery condition event, such as thermal runaway. In some embodiments, the aerosol sensor 202 may transmit a notification of the battery condition event and an associated timestamp, to the controller 102 for further processing.

As further depicted in FIG. 2, the example battery safety evaluation system 100a includes a pressure sensor 204. A pressure sensor 204 may be any electrical, mechanical, and/or electro-mechanical device capable of generating a signal as a function of the pressure imposed by the surrounding atmosphere. As gases are released into the interior battery compartment 212, and as the heated air within the interior battery compartment 212 expands, the pressure within the interior battery compartment will increase. A sudden increase in pressure, within the battery package 104 may be an indicator that a battery condition (e.g., a thermal runaway event) has or is occurring. The pressure sensor 204 may be coupled with circuitry to provide an electrical output representing the pressure within the interior battery compartment, which may be transmitted to the controller 102 as internal data 110. In some embodiments, the pressure sensor 204 may further include a processor, allowing the pressure sensor 204 to process measured pressure values and detect a battery condition event, such as thermal runaway. In some embodiments, the pressure sensor 204 may transmit a notification of the battery condition event and an associated timestamp, to the controller 102 for further processing.

As further depicted in FIG. 2, the example battery safety evaluation system 100a includes a temperature sensor 208. A temperature sensor 208 may be any electrical, mechanical, and/or electro-mechanical device capable of generating a signal as a function of the temperature of the atmosphere immediately surrounding the temperature sensor 208. As depicted in FIG. 2, the example temperature sensor 208 is disposed in the interior battery compartment 212 to measure internal data representative of an internal battery condition event. A battery condition, such as a thermal runaway event, is often induced by the uncontrollable release of heat of the underlying atomic reactions. A sudden increase in temperature, within the battery package 104 may be an indicator that a battery condition (e.g., a thermal runaway event) has or is occurring. The temperature sensor 208 may be coupled with circuitry to provide an electrical output representing the temperature within the interior battery compartment 212, which may be transmitted to the controller 102 as internal data 110. In some embodiments, the temperature sensor 208 may further include a processor, allowing the temperature sensor 208 to process measured temperature values and detect a battery condition event, such as thermal runaway. In some embodiments, the temperature sensor 208 may transmit a notification of the battery condition event and an associated timestamp, to the controller 102 for further processing.

As further depicted in FIG. 2, the example battery safety evaluation system 100a includes a vibration sensor 206. A vibration sensor 206 may be any electrical, mechanical, and/or electro-mechanical device capable of generating a signal as a function of the motion of the coupled physical object. As depicted in FIG. 2, the example vibration sensor 206 is disposed proximate the exterior of the battery housing 210 to measure external vibration data representative of an external battery condition event. In some embodiments, the vibration sensor 206 may be attached directly to the exterior of the battery housing 210, such that any vibration of the battery package 104 is detected. In some embodiments, the vibration sensor 206 may be attached to the battery housing 210 within the interior battery compartment 212 from where the vibration sensor 206 may continue to detect the vibration of the battery package 104. A battery condition, such as a thermal runaway event, may be accompanied by a change in the vibration of the battery package 104. The vibration sensor 206 may, in some embodiments, measure the amplitude and frequency of vibrations to the battery housing 210. Any significant deviation in vibration frequency (e.g., higher frequency, lower frequency) may be an indicator of a battery condition, such as a thermal runaway event. In addition, a vibration sensor may detect significant impacts to the battery package 104 and/or penetrating forces into the battery package 104. Such impacts may be an indicator of an external condition causing a dangerous battery condition. The vibration sensor 206 may be coupled with circuitry to provide an electrical output representing the vibration to the battery housing 210, which may be transmitted to the controller 102 as external data 112. In some embodiments, the vibration sensor 206 may further include a processor, allowing the vibration sensor 206 to process measured vibration values and detect a battery condition event, such as thermal runaway. In some embodiments, the vibration sensor 206 may transmit a notification of the battery condition event and an associated timestamp, to the controller 102 for further processing.

FIG. 3 illustrates an example controller 102 in accordance with at least some example embodiments of the present disclosure. The controller 102 includes processor 302, input/output circuitry 304, data storage media 306, communications circuitry 308, internal sensing element circuitry 310, and external sensing element circuitry 312. In some embodiments, the controller 102 is configured, using one or more of the sets of circuitry 302, 304, 306, 308, 310, and/or 312, to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, two sets of circuitry may both leverage use of the same processor(s), network interface(s), storage medium(s), and/or the like, to perform their associated functions, such that duplicate hardware is not required for each set of circuitry. The user of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the controller 102 provide or supplement the functionality of other particular sets of circuitry. For example, the processor 302 in some embodiments provides processing functionality to any of the sets of circuitry, the data storage media 306 provides storage functionality to any of the sets of circuitry, the communications circuitry 308 provides network interface functionality to any of the sets of circuitry, and/or the like.

In some embodiments, the processor 302 (and/or co-processor or any other processing circuitry assisting or otherwise associated with the processor) is/are in communication with the data storage media 306 via a bus for passing information among components of the controller 102. In some embodiments, for example, the data storage media 306 is non-transitory and may include, for example, one or more volatile and/or non-volatile memories. In other words, for example, the data storage media 306 in some embodiments includes or embodies an electronic storage device (e.g., a computer readable storage medium). In some embodiments, the data storage media 306 is configured to store information, data, content, applications, instructions, or the like, for enabling the controller 102 to carry out various functions in accordance with example embodiments of the present disclosure.

The processor 302 may be embodied in a number of different ways. For example, in some example embodiments, the processor 302 includes one or more processing devices configured to perform independently. Additionally or alternatively, in some embodiments, the processor 302 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the controller 102, and/or one or more remote or "cloud" processor(s) external to the controller 102.

In an example embodiment, the processor 302 is configured to execute instructions stored in the data storage media 306 or otherwise accessible to the processor. Alternatively or additionally, the processor 302 in some embodiments is configured to execute hard-coded functionality. As such, whether configured by hardware or software methods, or by a combination thereof, the processor 302 represents an entity (e.g., physically embodied in circuitry) capable of performing operations according to an embodiment of the present disclosure while configured accordingly. Alternatively or additionally, as another example in some example embodiments, when the processor 302 is embodied as an executor of software instructions, the instructions specifically configure the processor 302 to perform the algorithms embodied in the specific operations described herein when such instructions are executed.

As one particular example embodiment, the processor 302 is configured to perform various operations associated with determining a cause of a battery condition (e.g., a thermal runaway event). In some embodiments, the processor 302 includes hardware, software, firmware, and/or a combination thereof, that receives and/or determines a gas carrier rate. Additionally or alternatively, in some embodiments, the processor 302 includes hardware, software, firmware, and/or a combination thereof, that receives, from an internal sensing element 106 attached to an interior battery compartment 212 of a battery, internal data 110 representative of an internal battery condition event. Additionally or alternatively, in some embodiments, the processor 302 includes hardware, software, firmware, and/or a combination thereof, that receives, from an external sensing element 108 attached to a battery housing 210 of the battery, external data representative of an external battery condition event. Additionally or alternatively, in some embodiments, the processor 302 includes hardware, software, firmware, and/or a combination thereof, that determines the cause of the battery condition based at least in part on a time sequence of events generated from the internal data 110 captured by the internal sensing element 106 and representative of the internal battery condition event and the external data 112 captured by the external sensing element 108 and representative of the external battery condition event.

In some embodiments, the controller 102 includes input/output circuitry 304 that provides output to the user and, in some embodiments, to receive an indication of a user input. In some embodiments, the input/output circuitry 304 is in communication with the processor 302 to provide such functionality. The input/output circuitry 304 may comprise one or more user interface(s) (e.g., user interface) and in some embodiments includes a display that comprises the interface(s) rendered as a web user interface, an application user interface, a user device, a backend system, or the like. The processor 302 and/or input/output circuitry 304 comprising the processor may be configured to control one or more functions of one or more user interface elements through computer program instructions (e.g., software and/or firmware) stored on a memory accessible to the processor (e.g., data storage media 306, and/or the like). In some embodiments, the input/output circuitry 304 includes or utilizes a user-facing application to provide input/output functionality to a client device and/or other display associated with a user.

In some embodiments, the controller 102 includes communications circuitry 308. The communications circuitry 308 includes any means such as a device or circuitry embodied in either hardware or a combination of hardware and software that is configured to receive and/or transmit data from/to a network and/or any other device, circuitry, or module in communication with the controller 102. In this regard, the communications circuitry 308 includes, for example in some embodiments, a network interface for enabling communications with a wired or wireless communications network. Additionally or alternatively in some embodiments, the communications circuitry 308 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 308 includes circuitry for interacting with the antenna(s) and/or other hardware or software to cause transmission of signals via the antenna(s) or to handle receipt of signals received via the antenna(s). In some embodiments, the communications circuitry 308 enables transmission to and/or receipt of data from a client device in communication with the controller 102.

The internal sensing element circuitry 310 includes hardware, software, firmware, and/or a combination thereof, that supports various functionality associated with configuring and/or communicating with an internal sensing element 106. For example, in some embodiments, the internal sensing element circuitry 310 includes hardware, software, firmware, and/or a combination thereof to communicate with the internal sensing element 106 according to an established protocol to provide appropriate configuration and/or calibration parameters to receive accurate data representing a physical condition of the environment. Additionally or alternatively, in some embodiments, the internal sensing element circuitry 310 includes hardware, software, firmware, and/or a combination thereof, to receive captured internal data 110 for processing to determine if an internal battery condition event has occurred. Additionally or alternatively, in some embodiments, the internal sensing element circuitry 310 includes hardware, software, firmware, and/or a combination thereof, that receives notification of an internal battery condition event, such as a thermal runaway event, detected by the internal sensing element 106. In some embodiments, the internal sensing element circuitry 310 includes a separate processor, specially configured field programmable gate array (FPGA), or a specially programmed application specific integrated circuit (ASIC).

The external sensing element circuitry 312 includes hardware, software, firmware, and/or a combination thereof, that supports various functionality associated with configuring and/or communicating with an external sensing element 108. For example, in some embodiments, the external sensing element circuitry 312 includes hardware, software, firmware, and/or a combination thereof to communicate with the external sensing element 108 according to an established protocol to provide appropriate configuration and/or calibration parameters to receive accurate data representing a physical condition of the environment. Additionally or alternatively, in some embodiments, the external sensing element circuitry 312 includes hardware, software, firmware, and/or a combination thereof, to receive captured external data 112 for processing to determine if an external battery condition event has occurred. Additionally or alternatively, in some embodiments, the external sensing element circuitry 312 includes hardware, software, firmware, and/or a combination thereof, that receives notification of an external battery condition event, such as a thermal runaway event, detected by the external sensing element 108. In some embodiments, the external sensing element circuitry 312 includes a separate processor, specially configured field programmable gate array (FPGA), or a specially programmed application specific integrated circuit (ASIC).

Additionally or alternatively, in some embodiments, one or more of the sets of circuitry 302-312 are combinable. Additionally or alternatively, in some embodiments, one or more of the sets of circuitry perform some or all of the functionality described associated with another component. For example, in some embodiments, one or more sets of circuitry 302-714 are combined into a single module embodied in hardware, software, firmware, and/or a combination thereof. Similarly, in some embodiments, one or more of the sets of circuitry, for example internal sensing element circuitry 310, and/or external sensing element circuitry 312, is/are combined such that the processor 302 performs one or more of the operations described above with respect to each of these circuitry individually.

Referring now to FIG. 4, an example event sequence graph 400 is provided. The event sequence graph 400 depicts graphs of three different physical conditions of the environment, each as a function of time. Graph 402 depicts vibration data as measured by, for example, a vibration sensor (e.g., vibration sensor 206) as a function of time. As depicted in graph 402, the vibration amplitude is measured in gravitational-force units, or Gs. While depicted as a measurement of vibration amplitude in gravitational-force-units, a vibration sensor may measure the vibration in relation to frequency as measured in Hertz, in relation to velocity as measured in meters per second, in relation to displacement as measured in millimeters, in relation to acceleration as measured in meters per second squared, or other similar measurements.

Graph 402 additionally depicts an example vibration threshold 420. In some embodiments, a vibration threshold 420 may be established based on the battery package 104, the size and make-up of the battery, the operating vehicle, and other factors. The vibration threshold 420 may be pre-determined and/or a vibration threshold 420 may be established based on readings obtained during normal operation. In an instance in which the vibration sensor is measuring external data, an external battery condition event may be registered when the magnitude of the vibration exceeds the vibration threshold, as seen at point 408. An external battery condition event may be associated with a time, for example, vibration event time 410. In some embodiments, the occurrence of an external battery condition event may be established by the vibration sensor 206, while in some embodiments, the controller 102 may establish the occurrence of an external battery condition event based on the received external data 112. The external battery condition event registered by the vibration sensor 206 and the associated vibration event time 410 may be used to determine the cause of the battery condition.

As further depicted in FIG. 4, the example event sequence graph 400 further includes a pressure data graph 404. Graph 404 depicts the pressure data measured by, for example, a pressure sensor 204. Graph 404 charts the measured pressure in kilopascals as a function of time. Graph 404 additionally depicts an example pressure threshold 422 that may be pre-determined based on the physical characteristics and chemical make-up of the battery package 104, or may be determined during operation. When the magnitude of pressure exceeds the pressure threshold 422 as shown at point 416, a battery condition event may be registered. In some embodiments, in which the pressure sensor 204 is disposed in the interior battery compartment 212, the battery condition event is an internal battery condition event. A registered battery condition event is similarly associated with a time, for example, pressure event time 418. The internal battery condition event registered by the pressure sensor 204 and the associated pressure event time 418 may be used to determine the cause of the battery condition.

As further depicted in FIG. 4, the example event sequence graph 400 further includes an aerosol data graph 406. As described in relation to FIG. 2, an aerosol sensor 202 may measure the concentration of particles indicative of a battery condition (e.g., smoke particles). Graph 406 charts the concentration of particles indicative of a battery condition as a function of time. The concentration of graph 406 depicts a measured concentration of particles in micrograms per meter cubed. Graph 406 additionally depicts an example aerosol threshold 424 that may be pre-determined based on the physical characteristics and chemical make-up of the battery package 104, or may be determined during operation. When the detected concentration of particles exceeds the aerosol threshold 424 as shown at point 412, a battery condition event may be registered. In some embodiments, in which the aerosol sensor 202 is disposed in the interior battery compartment 212, the battery condition event is an internal battery condition event. The registered battery condition event is similarly associated with a time, for example, aerosol event time 414. The internal battery condition event registered by the pressure sensor 204 and the associated aerosol event time 414 may be used to determine the cause of the battery condition.

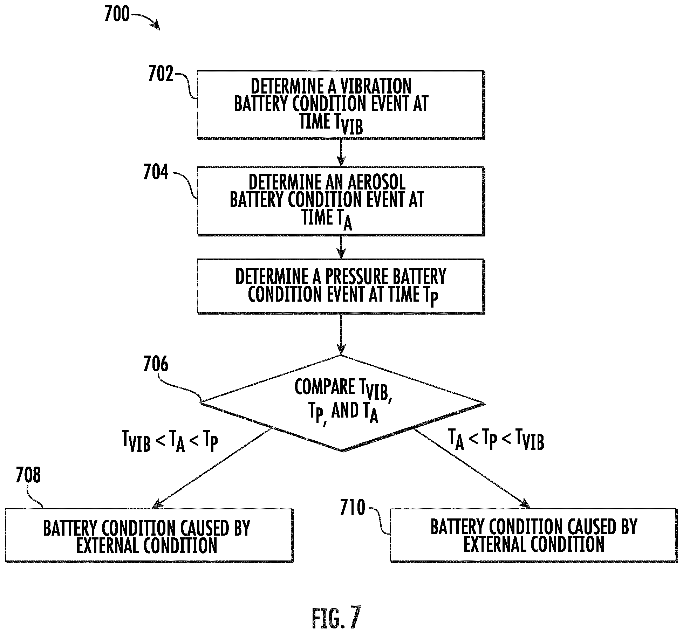

The time sequence of the battery condition events as shown in event sequence graph 400 are first, an external vibration battery condition event, second, an internal aerosol battery condition event, and third, an internal pressure battery condition event. As further described in relation to FIG. 7, this sequence of events may be indicative of a battery condition caused by an external condition.

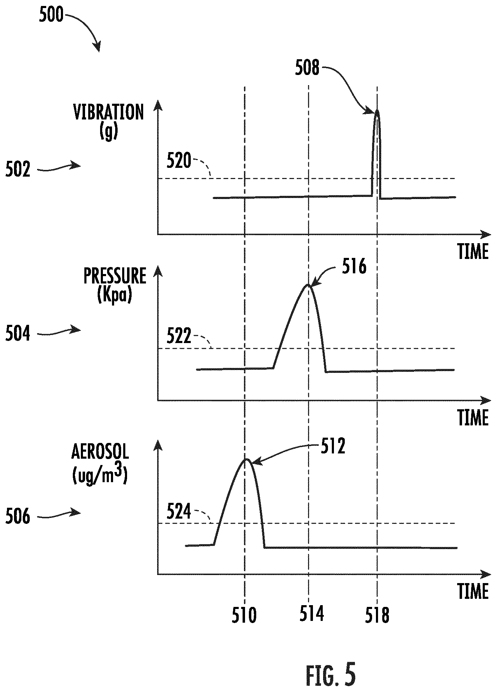

Referring now to FIG. 5, an example event sequence graph 500 is provided. The event sequence graph 500, similar to FIG. 4 depicts a vibration data graph 502, a pressured data graph 504, and an aerosol data graph 506. Also, similar to FIG. 4, each graph includes a threshold value (e.g., vibration threshold 520, pressure threshold 522, and aerosol threshold 524). However, in the event sequence graph 500 of FIG. 5, the aerosol sensor 202 measures a value or sequence of values that exceed the aerosol threshold 524 first, at point 512 and associated with an aerosol event time 510. Next, the pressure sensor 204 measures a value or sequence of values that exceed the pressure threshold 522 at point 516 and associated with pressure event time 514. Finally, the vibration sensor 206 measures a value or sequence of values that exceed the vibration threshold 520 at point 508 and associated with vibration event time 518. As further described in relation to FIG. 7, this sequence of events may be indicative of a battery condition caused by an internal condition.

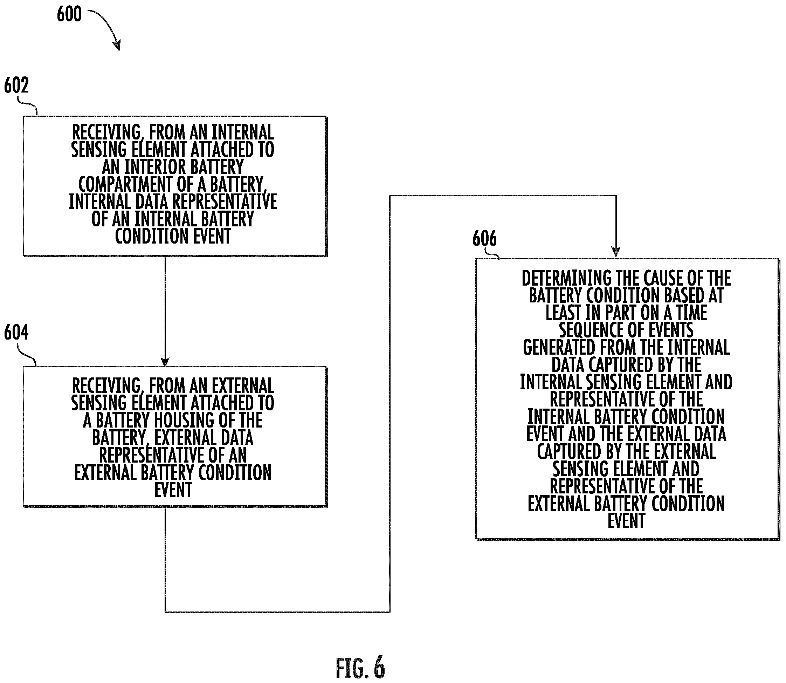

Referring now to FIG. 6, an example flow diagram illustrating an example method 600 for determining the cause of a battery condition (e.g., a thermal runaway event) is illustrated, in accordance with some embodiments of the present disclosure. The example method 600 begins at block 602 when a controller 102 receives, from an internal sensing element 106 attached to an interior battery compartment 212 of a battery (e.g., battery package 104), internal data 110 representative of an internal battery condition event. As described in relation to FIG. 2, an internal sensing element 106 may comprise one or more sensing devices, for example, an aerosol sensor 202, a pressure sensor 204, temperature sensor 208, or other similar sensing device. These sensing devices may be attached in the interior battery compartment 212 of the battery package 104. The internal sensing element 106 continually captures internal data 110 related to a physical condition of the internal environment of the battery package 104, for example, the temperature, the pressure, or the presence of certain gas molecules. The controller 102 may receive the internal data 110 at a regular interval. The received internal data 110 may represent an internal battery condition event. An internal battery condition event may be a sudden increase in temperature such that the temperature exceeds a determined temperature threshold. In some embodiments, the sudden increase in pressure may coincide with a thermal runaway event. An internal battery condition event may further include a sudden increase in pressure such that the pressure exceeds a determined pressure threshold. In some embodiments, the sudden increase in pressure may coincide with a thermal runaway event. An internal battery condition event may also include an increase in certain molecules indicative of smoke and/or a thermal runaway event such that the concentration of molecules exceeds a determined threshold. In some embodiments, the internal sensing element 106 may determine when an internal battery condition event, such as a thermal runaway event, has occurred and transmit notification of the internal battery condition event.

At block 604, the controller 102 receives, from an external sensing element 108 attached to a battery housing 210 of the battery (e.g., battery package 104), external data representative of an external battery condition event.

As described in relation to FIG. 2, an external sensing element 108 may comprise one or more sensing devices, for example, a vibration sensor 206, or other similar sensing device. The sensing devices comprising the external sensing element 108 may be attached to the exterior surface of the of the battery package 104. The external sensing element 108 continually captures external data 112 related to a physical condition of the environment outside of the battery package 104, for example, the temperature and/or the vibrations of the battery package 104. The controller 102 may receive the external data 112 at a regular interval. The received external data 112 may represent an external battery condition event. An external battery condition event may be a sudden jolt, shock, impact, or puncture that is manifest in the amplitude data received from the external sensing element 108. An external battery condition event captured by and external vibration sensor 206, may also be a change in frequency (higher or lower) from the frequency of normal operation. In some embodiments, the external sensing element 108 may determine when an external battery condition event, such as a thermal runaway event or impact, has occurred and transmit notification of the external battery condition event.

At block 606, the controller 102 determines the cause of the battery condition based at least in part on a time sequence of events generated from the internal data 110 captured by the internal sensing element 106 and representative of the internal battery condition event and the external data 112 captured by the external sensing element 108 and representative of the external battery condition event. Utilizing the data received (e.g., internal data 110 and external data 112), a controller 102 may determine the occurrence of a battery condition event.

A battery condition event may be an internal battery condition event or an external battery condition event based on the positioning of the sensing devices. Internal sensing elements 106 may include aerosol sensors 202, pressure sensors 204, temperature sensors 208, and other similar sensors positioned in the interior battery compartment 212 of a battery package 104 and producing data output representative of the physical conditions of the environment within the interior battery compartment 212. An internal battery condition event occurs when a physical characteristic of the interior battery compartment 212 exceeds a threshold (e.g., pressure threshold 422, aerosol threshold 424) and/or when an abrupt change in the physical condition is measured. For example, an internal battery condition event may be registered if the pressure measured within the interior battery compartment 212 exceeds the pressure threshold 422. As another example, an internal battery condition event may be registered if the concentration of gas molecules indicative of a battery condition such as a thermal runaway event (e.g., smoke molecules) within the interior battery compartment 212 exceeds the aerosol threshold 424.

External sensing elements 108 may include vibration sensors 206 and other similar sensors positioned on or proximate the battery housing 210 of a battery package 104 and producing data output representative of the physical conditions of the environment external to the battery package 104. An external battery condition event occurs when a physical characteristic of the environment outside the battery package 104 exceeds a threshold (e.g., vibration threshold 420) and/or when an abrupt change in the physical condition is measured. For example, an external battery condition event may be registered if the magnitude of vibration measured on the battery housing 210 of the battery package 104 exceeds the vibration threshold 420. As another example, an external battery condition event may be registered if the frequency of the measured vibration on the battery housing 210 measured is outside the range of the frequency of normal operation.

In some embodiments, the sensing device may determine if a battery condition event has occurred and transmit notification and an associated time stamp (e.g. vibration event time 410, aerosol event time 414, pressure event time 418) to the controller 102.

Once the internal and external battery condition events have been determined and associated with a time stamp, the controller 102 may determine the cause of the battery condition. As further explained in relation to FIG. 7, a cause of the external battery condition may be determined based on the time sequence of the internal and external battery condition events.

Referring now to FIG. 7, an example battery condition cause decision tree 700 is provided. As depicted in FIG. 7, the cause of a battery condition (e.g., a thermal runaway event) may be determined based on the sequence of events detected by the individual internal and external sensing devices. While the battery condition cause decision tree 700 of FIG. 7 is depicted based on battery condition events from an aerosol sensor 202 and pressure sensor 204 positioned within the interior battery compartment 212, and a vibration sensor 206 attached to the battery housing 210 of the battery package 104, additional sensing devices may replace or supplement the depicted sensing devices. For example, a temperature sensor 208 positioned within the interior battery compartment 212 may replace a pressure sensor 204 and detect internal battery condition events based on the temperature of the interior battery compartment 212.

The example battery condition cause decision tree 700 begins at step 702 by determining a vibration battery condition event and associating the event with a time (*T_{VIB}*). *A* vibration battery condition event may occur when the amplitude of the vibration of the battery package 104 exceeds a vibration threshold (e.g., vibration threshold 420, 520). The time (*T_{VIB}*) represents the time at which the vibration condition event occurred.

The example battery condition cause decision tree 700 at step 704, determines an aerosol battery condition event and an associated event time (*T_{P}*). An aerosol sensor 202 may be configured to detect molecules indicative of smoke or other molecules indicative of a battery condition (e.g., methane, carbon, and diethyl carbonate). An aerosol battery condition event may occur when the presence of a particular molecule is detected, or the concentration of the particular molecule exceeds a threshold limit (e.g., aerosol threshold 424, 524). The time (*T_{A}*) represents the time at which the aerosol condition event occurred.

The example battery condition cause decision tree 700 continues at step 706 by determining a pressure battery condition event and associating the event with a time (*T_{P}*). A pressure battery condition event may occur when the measured pressure of the interior battery compartment 212 exceeds a pressure threshold (e.g., pressure threshold 422, 522). The time (*T_{P}*) represents the time at which the pressure condition event occurred.

The example battery condition cause decision tree 700 continues at step 706 by comparing the battery condition event times *T_{VIB}, Tₚ,* and *T_{A}.* In an instance in which *T_{VIB} < T_{A} < Tₚ,* the controller 102 continues to step 708 and determines that the battery condition was caused by an external condition. In an example scenario, an external condition such as an impact to the battery package 104 or an object penetrating the battery housing 210 of the battery package 104 may damage the internal components of the battery package 104, such as the battery cells 214, initiating a thermal runaway event. In such a scenario, the vibration sensor 206 may first register a battery condition event at time *T_{VIB}* when the object impacts the battery package 104. As the damaged battery package 104 begins to enter the initial stages of thermal runaway, an aerosol sensor 202 may detect an elevated level of molecules indicative of smoke and register a second battery condition event at time *T_{A}.* Finally, as the ions in the battery cells 214 react uncontrollably, the temperature and pressure within the interior battery compartment 212 suddenly and drastically rise. A pressure sensor 204 may register a third battery condition event at time *Tₚ.* Thus, *T_{VIB} < T_{A} < T_{P}* may be indicative of a battery condition caused by an external condition.

In an instance in which *T_{A} < T_{P} < T_{VIB},* the controller 102 continues to step 710 and determines that the battery condition was caused by an internal condition. In an example scenario, an internal condition such as overcharging the battery package 104 may damage the internal components of the battery package 104, such as the battery cells 214, initiating a thermal runaway event. In such a scenario, the ions within the battery cells 214 may begin to react in an uncontrollably, generating smoke molecules and other molecules indicative of a thermal runaway event. The aerosol sensor 202 may detect the elevated level of molecules indicative of the thermal **runaway** event (e.g., smoke, methane, carbon, diethyl carbonate) and register a first battery condition event at time *T_{A}.* As the ions in the battery cells 214 continue to react uncontrollably, the temperature and pressure within the interior battery compartment 212 suddenly and drastically rise. A pressure sensor 204 may register a second battery condition event at time *Tₚ.* The rising pressure within the battery package 104 may cause the battery package 104 to bulge and/or burst, causing abnormal variations in the frequency and amplitude of vibrations on the battery housing 210. The vibration sensor 206 may detect these variations and register a third battery condition event at time *T_{VIB}.* Thus, *T_{A} < T_{P} < T_{VIB},* may be indicative of a battery condition caused by an internal condition.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above.

Additionally, the section headings used herein are provided for consistency with the suggestions under 37 C.F.R. 1.77 or to otherwise provide organizational cues. These headings shall not limit or characterize the invention(s) set out in any claims that may issue from this disclosure.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. A battery safety evaluation system comprising:
a battery comprising:
a battery housing defining an interior battery compartment; and
an internal sensing element attached to the interior battery compartment, wherein the internal sensing element is configured to capture internal data representative of an internal battery condition event;
an external sensing element attached to the battery housing, wherein the external sensing element is configured to capture external data representative of an external battery condition event; and
a controller communicatively connected to the internal sensing element and the external sensing element,
wherein the controller determines a cause of a battery condition based at least in part on a time sequence of events generated from the internal data captured by the internal sensing element and representative of the internal battery condition event and the external data captured by the external sensing element and representative of the external battery condition event.

2. The battery safety evaluation system of Claim 1, wherein the battery condition is a thermal runaway event.

3. The battery safety evaluation system of Claim 1, wherein the internal sensing element comprises at least one of a pressure sensor and an aerosol sensor.

4. The battery safety evaluation system of Claim 1, wherein the external sensing element comprises at least a vibration sensor.

5. The battery safety evaluation system of Claim 1, wherein the internal sensing element comprises a pressure sensor and an aerosol sensor, and wherein the external sensing element comprises a vibration sensor.

6. The battery safety evaluation system of Claim 5, wherein a vibration battery condition event is captured at a vibration event time, an aerosol battery condition event is captured at an aerosol event time, and a pressure battery condition event is captured at a pressure event time, such that:
in an instance in which the vibration event time is earlier than the aerosol event time, and the aerosol event time is earlier than the pressure event time, the battery safety evaluation system determines the cause of the battery condition is an external condition, and
in an instance in which the aerosol event time is earlier than the pressure event time, and the pressure event time is earlier than the vibration event time, the battery safety evaluation system determines the cause of the battery condition is an internal condition.

7. A method for determining a cause of a battery condition, the method comprising:
receiving, from an internal sensing element attached to an interior battery compartment of a battery, internal data representative of an internal battery condition event;
receiving, from an external sensing element attached to a battery housing of the battery, external data representative of an external battery condition event; and
determining the cause of the battery condition based at least in part on a time sequence of events generated from the internal data captured by the internal sensing element and representative of the internal battery condition event and the external data captured by the external sensing element and representative of the external battery condition event.

8. The method of Claim 7, wherein the battery condition is a thermal runaway event.

9. The method of Claim 7, wherein the internal sensing element comprises at least one of a pressure sensor and an aerosol sensor.

10. The method of Claim 7, wherein the external sensing element comprises at least a vibration sensor.

11. The method of Claim 7, wherein the internal sensing element comprises a pressure sensor and an aerosol sensor, and wherein the external sensing element comprises a vibration sensor.

12. The method of Claim 11, further comprising:
receiving vibration data representative of a vibration battery condition event, captured at a vibration event time;
receiving aerosol data representative of an aerosol battery condition event, captured at an aerosol event time; and
receiving pressure data representative of a pressure battery condition event, captured at a pressure event time,
wherein determining the cause of the battery condition further comprises comparing the vibration event time, the aerosol event time, and the pressure event time, such that:
in an instance in which the vibration event time is earlier than the aerosol event time, and the aerosol event time is earlier than the pressure event time, the cause of the battery condition is an external condition, and
in an instance in which the aerosol event time is earlier than the pressure event time, and the pressure event time is earlier than the vibration event time, the cause of the battery condition is an internal condition.

13. A computer program product for determining a cause of a battery condition, the computer program product comprising at least one non-transitory computer-readable storage medium having computer-readable program code portions stored therein, the computer-readable program code portions comprising an executable portion configured to:
receive, from an internal sensing element attached to an interior battery compartment of a battery, internal data representative of an internal battery condition event;
receive, from an external sensing element attached to a battery housing of the battery, external data representative of an external battery condition event; and
determine the cause of the battery condition based at least in part on a time sequence of events generated from the internal data captured by the internal sensing element and representative of the internal battery condition event and the external data captured by the external sensing element and representative of the external battery condition event.

14. The computer program product of Claim 13, wherein the internal sensing element comprises a pressure sensor and an aerosol sensor, and wherein the external sensing element comprises a vibration sensor.

15. The computer program product of Claim 14, wherein the computer-readable program code portions comprising an executable portion are further configured to:
receive vibration data representative of a vibration battery condition event, captured at a vibration event time;
receive aerosol data representative of an aerosol battery condition event, captured at an aerosol event time; and
receive pressure data representative of a pressure battery condition event, captured at a pressure event time,
wherein determining the cause of the battery condition further comprises comparing the vibration event time, the aerosol event time, and the pressure event time, such that:
in an instance in which the vibration event time is earlier than the aerosol event time, and the aerosol event time is earlier than the pressure event time, the cause of the battery condition is an external condition, and
in an instance in which the aerosol event time is earlier than the pressure event time, and the pressure event time is earlier than the vibration event time, the cause of the battery condition is an internal condition.

## Patentansprüche

1. Batteriesicherheitsbewertungssystem, umfassend:
eine Batterie, umfassend:
ein Batteriegehäuse, das ein inneres Batteriefach definiert; und
ein an dem inneren Batteriefach angebrachtes internes Messelement, wobei das interne Messelement dazu konfiguriert ist, für ein internes Batteriezustandsereignis bezeichnende interne Daten zu erfassen;
ein an dem Batteriegehäuse angebrachtes externes Messelement, wobei das externe Messelement dazu konfiguriert ist, externe Daten zu erfassen, die bezeichnend sind für ein externes Batteriezustandsereignis; und
eine Steuerung, die kommunikativ mit dem internen Messelement und dem externen Messelement verbunden ist,
wobei die Steuerung eine Ursache für einen Batteriezustand auf Basis von mindestens teilweise einer Zeitsequenz von Ereignissen bestimmt, die erzeugt wird aus den von dem internen Messelement erfassten und für das interne Batteriezustandsereignis bezeichnenden internen Daten, und aus den von dem externen Messelement erfassten und für das externe Batteriezustandsereignis bezeichnenden externen Daten.

2. Batteriesicherheitsbewertungssystem nach Anspruch 1, wobei der Batteriezustand ein Ereignis des thermischen Durchgehens ist.

3. Batteriesicherheitsbewertungssystem nach Anspruch 1, wobei das interne Messelement mindestens eines aus einem Drucksensor und einem Aerosolsensor umfasst.

4. Batteriesicherheitsbewertungssystem nach Anspruch 1, wobei das externe Messelement mindestens einen Vibrationssensor umfasst.

5. Batteriesicherheitsbewertungssystem nach Anspruch 1, wobei das interne Messelement einen Drucksensor und einen Aerosolsensor umfasst, und wobei das externe Messelement einen Vibrationssensor umfasst.

6. Batteriesicherheitsbewertungssystem nach Anspruch 5, wobei ein Vibrationsbatteriezustandsereignis an einem Vibrationsereigniszeitpunkt erfasst wird, ein Aerosolbatteriezustandsereignis an einem Aerosolereigniszeitpunkt erfasst wird und ein Druckbatteriezustandsereignis an einem Druckereigniszeitpunkt erfasst wird, derart dass:
in einem Fall, in dem der Vibrationsereigniszeitpunkt früher ist als der Aerosolereigniszeitpunkt, und der Aerosolereigniszeitpunkt früher ist als der Druckereigniszeitpunkt, das Batteriesicherheitsbewertungssystem bestimmt, dass die Ursache des Batteriezustands ein externer Zustand ist, und
in einem Fall, in dem der Aerosolereigniszeitpunkt früher ist als der Druckereigniszeitpunkt, und der Druckereigniszeitpunkt früher ist als der Vibrationsereigniszeitpunkt, das Batteriesicherheitsbewertungssystem bestimmt, dass die Ursache des Batteriezustands ein interner Zustand ist.

7. Verfahren zum Bestimmen einer Ursache eines Batteriezustands, das Verfahren umfassend:
Empfangen, von einem an einem inneren Batteriefach einer Batterie angebrachten internen Messelement, von für ein internes Batteriezustandsereignis bezeichnenden internen Daten;
Empfangen, von einem an einem Batteriegehäuse einer Batterie angebrachten externen Messelement, von für ein externes Batteriezustandsereignis bezeichnenden externen Daten; und
Bestimmen der Ursache des Batteriezustands auf Basis von mindestens teilweise einer Zeitsequenz von Ereignissen, die erzeugt wird aus den von dem internen Messelement erfassten und für das interne Batteriezustandsereignis bezeichnenden internen Daten, und aus den von dem externen Messelement erfassten und für das externe Batteriezustandsereignis bezeichnenden externen Daten.

8. Verfahren nach Anspruch 7, wobei der Batteriezustand ein Ereignis des thermischen Durchgehens ist.

9. Verfahren nach Anspruch 7, wobei das interne Messelement mindestens eines aus einem Drucksensor und einem Aerosolsensor umfasst.

10. Verfahren nach Anspruch 7, wobei das externe Messelement mindestens einen Vibrationssensor umfasst.

11. Verfahren nach Anspruch 7, wobei das interne Messelement einen Drucksensor und einen Aerosolsensor umfasst, und wobei das externe Messelement einen Vibrationssensor umfasst.

12. Verfahren nach Anspruch 11, ferner umfassend:
Empfangen von für ein Vibrationsbatteriezustandsereignis bezeichnenden Vibrationsdaten, die zu einem Vibrationsereigniszeitpunkt erfasst werden;
Empfangen von für ein Aerosolbatteriezustandsereignis bezeichnenden Aerosoldaten, die zu einem Aerosolereigniszeitpunkt erfasst werden; und
Empfangen von für ein Druckbatteriezustandsereignis bezeichnenden Druckdaten, die zu einem Druckereigniszeitpunkt erfasst werden,
wobei das Bestimmen der Ursache des Batteriezustands ferner das Vergleichen des Vibrationsereigniszeitpunkts, des Aerosolereigniszeitpunkts und des Druckereigniszeitpunkts umfasst, derart dass:
in einem Fall, in dem der Vibrationsereigniszeitpunkt früher ist als der Aerosolereigniszeitpunkt, und der Aerosolereigniszeitpunkt früher ist als der Druckereigniszeitpunkt, die Ursache des Batteriezustands ein externer Zustand ist, und
in einem Fall, in dem der Aerosolereigniszeitpunkt früher ist als der Druckereigniszeitpunkt, und der Druckereigniszeitpunkt früher ist als der Vibrationsereigniszeitpunkt, die Ursache des Batteriezustands ein interner Zustand ist.

13. Computerprogrammprodukt zum Bestimmen einer Ursache eines Batteriezustands, wobei das Computerprogrammprodukt mindestens ein nichttransitorisches computerlesbares Speichermedium umfasst, das darauf gespeicherte computerlesbare Programmcodeabschnitte aufweist, wobei die computerlesbaren Programmcodeabschnitte einen ausführbaren Abschnitt umfassen, der dazu konfiguriert ist:
von einem an einem inneren Batteriefach einer Batterie angebrachten internen Messelement für ein internes Batteriezustandsereignis bezeichnende interne Daten zu empfangen;
von einem an einem Batteriegehäuse einer Batterie angebrachten externen Messelement für ein externes Batteriezustandsereignis bezeichnende externe Daten zu empfangen; und
die Ursache des Batteriezustands auf Basis von mindestens teilweise einer Zeitsequenz von Ereignissen zu bestimmen, die erzeugt wird aus den von dem internen Messelement erfassten und für das interne Batteriezustandsereignis bezeichnenden internen Daten, und aus den von dem externen Messelement erfassten und für das externe Batteriezustandsereignis bezeichnenden externen Daten.

14. Computerprogrammprodukt nach Anspruch 13, wobei das interne Messelement einen Drucksensor und einen Aerosolsensor umfasst, und wobei das externe Messelement einen Vibrationssensor umfasst.

15. Computerprogrammprodukt nach Anspruch 14, wobei die computerlesbaren Programmcodeabschnitte, die einen ausführbaren Abschnitt umfassen, ferner dazu konfiguriert sind:
für ein Vibrationsbatteriezustandsereignis bezeichnende Vibrationsdaten zu empfangen, die zu einem Vibrationsereigniszeitpunkt erfasst werden;
für ein Aerosolbatteriezustandsereignis bezeichnende Aerosoldaten zu empfangen, die zu einem Aerosolereigniszeitpunkt erfasst werden; und
für ein Druckbatteriezustandsereignis bezeichnende Druckdaten zu empfangen, die zu einem Druckereigniszeitpunkt erfasst werden,
wobei das Bestimmen der Ursache des Batteriezustands ferner das Vergleichen des Vibrationsereigniszeitpunkts, des Aerosolereigniszeitpunkts und des Druckereigniszeitpunkts umfasst, derart dass:
in einem Fall, in dem der Vibrationsereigniszeitpunkt früher ist als der Aerosolereigniszeitpunkt, und der Aerosolereigniszeitpunkt früher ist als der Druckereigniszeitpunkt, die Ursache des Batteriezustands ein externer Zustand ist, und
in einem Fall, in dem der Aerosolereigniszeitpunkt früher ist als der Druckereigniszeitpunkt, und der Druckereigniszeitpunkt früher ist als der Vibrationsereigniszeitpunkt, die Ursache des Batteriezustands ein interner Zustand ist.

## Revendications

1. Système d'évaluation de sécurité de batterie comprenant :
une batterie comprenant :
un boîtier de batterie définissant un compartiment de batterie intérieur ; et
un élément de détection interne fixé au compartiment de batterie intérieur, dans lequel l'élément de détection interne est configuré pour capturer des données internes représentatives d'un événement d'état de batterie interne ;
un élément de détection externe fixé au boîtier de batterie, dans lequel l'élément de détection externe est configuré pour capturer des données externes représentatives d'un événement d'état de batterie externe ; et
un contrôleur connecté de façon communicative à l'élément de détection interne et à l'élément de détection externe,
dans lequel le contrôleur détermine une cause d'un état de batterie sur la base au moins en partie d'une séquence temporelle d'événements générée à partir des données internes capturées par l'élément de détection interne et représentatives de l'événement d'état de batterie interne et des données externes capturées par l'élément de détection externe et représentatives de l'événement d'état de batterie externe.

2. Système d'évaluation de sécurité de batterie selon la revendication 1, dans lequel l'état de batterie est un événement d'emballement thermique.

3. Système d'évaluation de sécurité de batterie selon la revendication 1, dans lequel l'élément de détection interne comprend au moins l'un d'un capteur de pression et d'un capteur d'aérosol.

4. Système d'évaluation de sécurité de batterie selon la revendication 1, dans lequel l'élément de détection externe comprend au moins un capteur de vibration.

5. Système d'évaluation de sécurité de batterie selon la revendication 1, dans lequel l'élément de détection interne comprend un capteur de pression et un capteur d'aérosol, et dans lequel l'élément de détection externe comprend un capteur de vibration.

6. Système d'évaluation de sécurité de batterie selon la revendication 5, dans lequel un événement d'état de batterie concernant la vibration est capturé à un moment d'événement de vibration, un événement d'état de batterie concernant l'aérosol est capturé à un moment d'événement d'aérosol et un événement d'état de batterie concernant la pression est capturé à un moment d'événement de pression de telle sorte que :
dans un cas dans lequel le moment d'événement de vibration est antérieur au moment d'événement d'aérosol, et dans lequel le moment d'événement d'aérosol est antérieur au moment d'événement de pression, le système d'évaluation de sécurité de batterie détermine que la cause de l'état de batterie est un état externe, et
dans un cas dans lequel le moment d'événement d'aérosol est antérieur au moment d'événement de pression, et dans lequel le moment d'événement de pression est antérieur au moment d'événement de vibration, le système d'évaluation de sécurité de batterie détermine que la cause de l'état de batterie est un état interne.

7. Procédé de détermination d'une cause d'un état de batterie, le procédé comprenant :
la réception, à partir d'un élément de détection interne fixé à un compartiment de batterie intérieur d'une batterie, de données internes représentatives d'un événement d'état de batterie interne ;
la réception, à partir d'un élément de détection externe fixé à un boîtier de batterie de la batterie, de données externes représentatives d'un événement d'état de batterie externe ; et
la détermination de la cause de l'état de batterie sur la base au moins en partie d'une séquence temporelle d'événements générée à partir des données internes capturées par l'élément de détection interne et représentatives de l'événement d'état de batterie interne et des données externes capturées par l'élément de détection externe et représentatives de l'événement d'état de batterie externe.

8. Procédé selon la revendication 7, dans lequel l'état de batterie est un événement d'emballement thermique.

9. Procédé selon la revendication 7, dans lequel l'élément de détection interne comprend au moins l'un d'un capteur de pression et d'un capteur d'aérosol.

10. Procédé selon la revendication 7, dans lequel l'élément de détection externe comprend au moins un capteur de vibration.

11. Procédé selon la revendication 7, dans lequel l'élément de détection interne comprend un capteur de pression et un capteur d'aérosol, et dans lequel l'élément de détection externe comprend un capteur de vibration.

12. Procédé selon la revendication 11, comprenant en outre :
la réception de données de vibration représentatives d'un événement d'état de batterie concernant la vibration, capturées à un moment d'événement de vibration ;
la réception de données d'aérosol représentatives d'un événement d'état de batterie concernant l'aérosol, capturées à un moment d'événement d'aérosol ; et
la réception de données de pression représentatives d'un événement d'état de batterie concernant la pression, capturées à un moment d'événement de pression,
dans lequel la détermination de la cause de l'état de batterie comprend en outre la comparaison du moment d'événement de vibration, du moment d'événement d'aérosol et du moment d'événement de pression, de telle sorte que :
dans un cas dans lequel le moment d'événement de vibration est antérieur au moment d'événement d'aérosol, et dans lequel le moment d'événement d'aérosol est antérieur au moment d'événement de pression, la cause de l'état de batterie est un état externe, et
dans un cas dans lequel le moment d'événement d'aérosol est antérieur au moment d'événement de pression, et dans lequel le moment d'événement de pression est antérieur au moment d'événement de vibration, la cause de l'état de batterie est un état interne.

13. Produit de programme d'ordinateur pour déterminer une cause d'un état de batterie, le produit de programme d'ordinateur comprenant au moins un support de stockage non transitoire lisible par ordinateur ayant des portions de code de programme lisibles par ordinateur stockées dans celui-ci, les portions de code de programme lisibles par ordinateur comprenant une portion exécutable configurée pour :
recevoir, à partir d'un élément de détection interne fixé à un compartiment de batterie intérieur d'une batterie, des données internes représentatives d'un événement d'état de batterie interne ;
recevoir, à partir d'un élément de détection externe fixé à un boîtier de batterie de la batterie, des données externes représentatives d'un événement d'état de batterie externe ; et
déterminer la cause de l'état de batterie sur la base au moins en partie d'une séquence temporelle d'événements générée à partir des données internes capturées par l'élément de détection interne et représentatives de l'événement d'état de batterie interne et des données externes capturées par l'élément de détection externe et représentatives de l'événement d'état de batterie externe.

14. Produit de programme d'ordinateur selon la revendication 13, dans lequel l'élément de détection interne comprend un capteur de pression et un capteur d'aérosol, et dans lequel l'élément de détection externe comprend un capteur de vibration.

15. Produit de programme d'ordinateur selon la revendication 14, dans lequel les portions de code de programme lisibles par ordinateur comprenant une portion exécutable sont en outre configurées pour :
recevoir des données de vibration représentatives d'un événement d'état de batterie concernant la vibration, capturées à un moment d'événement de vibration ;
recevoir des données d'aérosol représentatives d'un événement d'état de batterie concernant l'aérosol, capturées à un moment d'événement d'aérosol ; et
recevoir des données de pression représentatives d'un événement d'état de batterie concernant la pression, capturées à un moment d'événement de pression,
dans lequel la détermination de la cause de l'état de batterie comprend en outre la comparaison du moment d'événement de vibration, du moment d'événement d'aérosol et du moment d'événement de pression, de telle sorte que :
dans un cas dans lequel le moment d'événement de vibration est antérieur au moment d'événement d'aérosol, et dans lequel le moment d'événement d'aérosol est antérieur au moment d'événement de pression, la cause de l'état de batterie est un état externe, et
dans un cas dans lequel le moment d'événement d'aérosol est antérieur au moment d'événement de pression, et dans lequel le moment d'événement de pression est antérieur au moment d'événement de vibration, la cause de l'état de batterie est un état interne.
